# EUROPÄISCHE PATENTANMELDUNG

(11) **EP 1 134 726 A1**
(43) Veröffentlichungstag der Anmeldung: **19.09.2001**
(21) Anmeldenummer: 00105466.7
(22) Anmeldetag: 15.03.2000
(51) Int. Cl.: G10L 15/06

(54) **Verfahren zur Erkennung von Sprachäusserungen nicht-muttersprachlicher Sprecher in einem Sprachverarbeitungssystem**

(71) Anmelder: SIEMENS AKTIENGESELLSCHAFT, 80333 München (DE)
(72) Erfinder: Niedermair, Gerhard, 85256 Vierkirchen (DE)

(57) **Zusammenfassung**

Die vorliegende Erfindung betrifft eine Spracherkennungsvorrichtung (1) zum Erkennen und Verarbeiten von Sprachäußerungen eines Anwenders in einer ersten Sprache mit einem ersten und zweiten phonembasierten Sprachmodell (2a, 2b) zum Erkennen von Sprachäußerungen in einer ersten und zweiten Sprache.

Weiterhin betrifft die vorliegenden Erfindung ein in dieser Spracherkennungsvorrichtung (1) angewendetes Verfahren zum Erkennen und Verarbeiten von Sprachäußerungen eines Anwenders in einer ersten Sprache.

## Beschreibung

Die vorliegende Erfindung betrifft ein Spracherkennungssystem zum Erkennen und Verarbeiten von Sprachäußerungen eines Anwenders in einer Sprache, wie es im Oberbegriff des beigefügten Anspruches 1 beschrieben ist, und ein in einer derartigen Vorrichtung angewendetes Verfahren zum Erkennen und Verarbeiten von Sprachäußerungen eines Anwenders in einer Sprache, wie es im Oberbegriff des beigefügten Anspruches 4 beschrieben ist.

Unter sprecherunabhängigen Spracherkennungssystemen versteht man Spracherkennungssysteme, deren einzelne Anwender nicht explizit mit diesem System trainiert haben, das heißt, deren einzelne Anwender keine eigenen Sprachproben zu Spracherkennung hinterlegt haben. Solche Systeme finden z. B. Anwendung bei Telefonauskünften, bei Banken und für Buchungssysteme. Der Anwender nimmt dabei in der Regel per Telefon mit der gewünschten Anwendung (z. B. mit seiner Bank) Kontakt auf, um z. B. seinen Kontostand abzufragen oder eine Überweisung zu tätigen.

Solche sprecherunabhängige Spracherkennungssysteme arbeiten meist mit phonembasierten (= lautbasierten) Sprachmodellen, anhand derer die Spracherkennung vorgenommen wird. Diesen akustischen Modellen liegt das Trainingsmaterial, das heißt die Sprachproben mit den Laut- und Sprachcharakteristika, von beispielsweise mehreren tausend repräsentativen Sprechern zugrunde.

Das so gesammelte Sprachmaterial deckt dabei in der Regel mehr oder weniger gut die Aussprachevarianten, das heißt die akustischen Realisierungsvarianten der Laute, der Anwender des Spracherkennungssystem ab, insbesondere dann, wenn es sich bei den Anwendern um Sprecher handelt, deren Muttersprache die Sprache der Anwendung ist (muttersprachlicher Anwender).

Dabei tritt allerdings das Problem auf, daß Anwender, deren Muttersprache nicht die Sprache der Anwendung ist, aufgrund der unterschiedlichen Bildung und Eigenheiten der Laute (Akzent) weitaus weniger gut erkannt werden.

Die Ursache hierfür liegt darin, daß beim Stand der Technik wenige oder gar keine Sprachproben von nicht-muttersprachlichen Sprechern in dem Trainingsmaterial enthalten sind. Eine Erhöhung der Anteile der nicht-muttersprachlichen Sprecher im Trainingsmaterial hat jedoch zur Folge, daß die Varianz des erzeugten Sprachmodelles, das heißt die Bandbreite, mit der ein Laut erkannt wird, vergrößert wird. Dies wiederum führt jedoch auch zu einer größeren Anzahl von Fehlerkennungen.

Außerdem müßten dann für jede Anwendergruppe (z. B. für Franzosen, Italiener, Spanier usw.) die Sprachproben von jeweils einer Vielzahl von repräsentativen Sprechern dieser Nationen in der Anwendungssprache (z. B. deutsch) hinterlegt werden, was wiederum einen großen Aufwand mit sich bringt.

Die Aufgabe der vorliegenden Erfindung ist somit, eine Spracherkennungsvorrichtung gemäß dem Oberbegriff des beigefügten Anspruches 1 und ein Verfahren gemäß dem Oberbegriff des beigefügten Anspruches 4 bereitzustellen, bei denen eine bessere Erkennung von nicht-muttersprachlichen Sprechern in einem Spracherkennungssystem ermöglicht wird. Diese Aufgabe wird durch eine Spracherkennungsvorrichtung gemäß dem beigefügten Anspruch 1 und ein Verfahren zur Spracherkennung gemäß dem beigefügten Anspruch 4 gelöst.

Vorteilhafte Ausgestaltungen der vorliegenden Erfindung sind in den Unteransprüchen 2, 3, 5 und 6 angegeben.

Gemäß der vorliegenden Erfindung werden zur Spracherkennung der Sprachäußerungen eines Anwenders zwei oder mehr Sprachmodelle herangezogen. Die Sprache der Anwendung ist dabei die erste Sprache (z. B. deutsch).

Wird der Dialog mit der Spracherkennungsvorrichtung von einem Anwender geführt, dessen Muttersprache die erste Sprache ist, so wird zur Spracherkennung das erste Sprachmodell, dem das Trainingsmaterial in der ersten Sprache (im Beispiel deutsch) zugrunde liegt, verwendet.

Wird jedoch der Dialog mit der Spracherkennungsvorrichtung von einem Anwender geführt, dessen Aussprache in der ersten Sprache von einem Akzent in der zweiten Sprache (z. B. französischer Akzent) geprägt ist, so wird zur Spracherkennung das zweite Sprachmodell, dem das Trainingsmaterial in der zweiten Sprache (im genannten Beispiel französisch) zugrunde liegt, verwendet. Die Laute, die mit der Charakteristik, das heißt mit dem Akzent, der zweiten Sprache gesprochen wurden, werden dann von der erfindungsgemäßen Übertragungsvorrichtung zur Spracherkennung auf Wörter in der ersten Sprache anhand des ersten Sprachmodelles, in dem die Wörter der ersten Sprache enthalten sind, übertragen.

Der Vorteil der vorliegenden Erfindung besteht darin, daß zur Spracherkennung von Anwendern, die die erste Sprache mit einem Akzent der zweiten Sprache sprechen, kein eigenes Sprachmodell erstellt bzw. trainiert werden muß. Zur Spracherkennung können in diesem Fall bestehende Sprachmodelle in der Anwendungssprache, der zweiten und weiteren Sprachen verwendet werden.

Zur Spracherkennung gemäß der vorliegenden Erfindung können außerdem sogenannte multilinguale Sprachmodelle verwendet werden, die zur Spracherkennung von mehreren verwandten Sprachen dienen. Die Spracherkennung in der ersten Sprache erfolgt dann ebenfalls wie oben beschrieben.

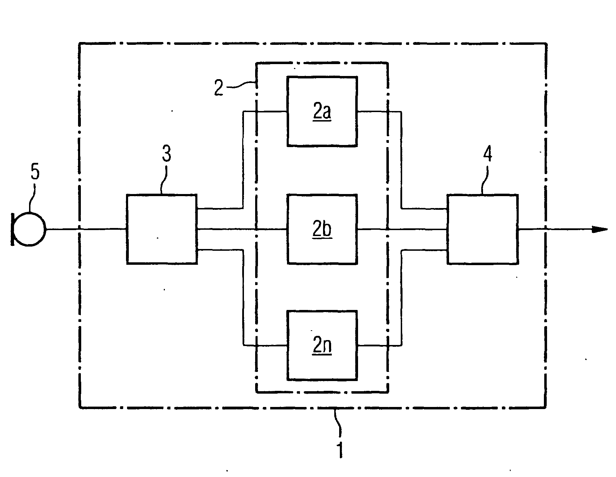

Die vorliegende Erfindung wird nachfolgend anhand eines bevorzugten Ausführungsbeispieles unter Bezug auf die beigefügte Figur 1 näher erläutert.

Fig. 1 zeigt dabei den schematischen Aufbau des Spracherkennungssystemes mit der erfindungsgemäßen Spracherkennungsvorrichtung.

Wie aus Fig. 1 ersichtlich ist, besteht das erfindungsgemäße Spracherkennungssystem aus der Spracherkennungsvorrichtung 1, einer Speichervorrichtung mit den einzelnen Sprachmodellen 2a ... 2n, die auch jeweils ein Teil eines multilingualen Sprachmodelles 2 sein können, der Auswahlvorrichtung zum Auswählen des Sprachmodelles und der Übertragungsvorrichtung 4 zum Übertragen von Lauten, die mit den Charakteristika der zweiten Sprache gesprochen werden, auf Worte der ersten Sprache.

Außerdem ist eine Eingabevorrichtung 5 zur Eingabe von Sprachäußerungen eines Anwenders Bestandteil des Spracherkennungssystemes. Die Eingabevorrichtung 5 ist schematisch als Mikrophon dargestellt und kann z. B. das Mikrophon eines Telefons sein, über das der Anwender mit der Spracherkennungsvorrichtung kommuniziert.

Ziel der vorliegenden Erfindung ist es, die Spracherkennung von nicht-muttersprachlichen Anwendern in einer bestimmten Sprache (z. B. deutsch gesprochen von einem Franzosen) zu verbessern. Dies wird dadurch erreicht, daß ein multilinguales Sprachmodell 2, das im genannten Beispiel das Trainingsmaterial zur deutschen und französischen Spracherkennung enthält, zur Erkennung der nicht-muttersprachlichen Sprecher in der bestimmten Sprache herangezogen wird.

Das Spracherkennungssystem bedient sich dabei sowohl des Sprachmodelles 2a, das mit muttersprachlichen Sprechern der Anwendungssprache erzeugt wurde, als auch der Sprachmodelle 2b...2n, die mit muttersprachlichen Sprechern einer oder mehrerer anderer Sprachen (die multilingualen Modelle, die sich bevorzugt aus den Sprachen zusammensetzen, deren Anwender als fremdsprachige Sprecher der Anwendungssprache erkannt werden sollen) erzeugt wurden.

Die vorliegende Erfindung basiert darauf, daß die einzelnen Sprachmodelle 2a ... 2n die Artikulationsbesonderheiten bzw. die Charakteristika der Laute enthalten und diese Charakteristika auch von den Anwendern beim Sprechen einer Fremdsprache mehr oder weniger stark in die fremde Sprache übertragen werden (z. B. der typische französische Akzent). Da die multilingualen Sprachmodelle die Artikulationsbesonderheiten der fremden Sprache enthalten, sind sie besser geeignet, einen Anwender einer Sprache, die nicht seine Muttersprache ist, zu erkennen. In der Spracherkennung wird dann, in Abhängigkeit davon, in welcher Perfektion der Anwender die Anwendungssprache beherrscht, das entsprechende Sprachmodell zur Erkennung herangezogen.

Dabei wird am Anfang des Dialoges zur Spracherkennung mit einem Anwender durch die Auswahlvorrichtung das Sprachmodell zur weiteren Erkennung ausgewählt, das die besten Erkennungergebnisse liefert. Wird z. B der Dialog von einem Anwender geführt, der die Anwendungssprache (z. B. Deutsch) mit einem starken ausländischen Akzent (z. B. Französischer Akzent) spricht, so werden die Laute (Phoneme) durch das entsprechende Sprachmodell erkannt. Die erfindungsgemäße Übertragungsvorrichtung überträgt dabei anhand des ersten Sprachmodelles, in dem das Trainingsmaterial für die erste Sprache bzw. die Anwendungssprache gespeichert ist, die erkannten Laute auf Wörter der Anwendungssprache.

Der Vorteil des erfindungsgemäßen Verfahrens liegt darin, daß keine jeweils eigenen sprachtypischen Modelle für nichtmuttersprachliche Sprecher erzeugt werden müssen (z. B deutsch gesprochen von Franzosen oder Spaniern), sondern in der Anwendung (ggf. multilinguale) Sprachmodelle aus den jeweils fremdsprachigen Modellen sowie das entsprechende sprachtypische Modell für muttersprachliche Sprecher gleichzeitig eingesetzt werden kann.

## Patentansprüche

1. Spracherkennungsvorrichtung (1) zum Erkennen und Verarbeiten von Sprachäußerungen eines Anwenders in einer ersten Sprache mit
einem ersten phonembasierten Sprachmodell (2a) zum Erkennen von Sprachäußerungen in einer ersten Sprache und
einem zweiten phonembasierten Sprachmodell (2b) zum Erkennen von Sprachäußerungen in einer zweiten Sprache, **gekennzeichnet durch**
eine Auswahlvorrichtung (3), die Anhand einer Sprachäußerung des Anwenders automatisch das erste oder das zweite Sprachmodell (2a, 2b) zur Spracherkennung auswählt, wobei dasjenige Sprachmodell (2a, 2b) ausgewählt wird, das ein besseres Erkennungsergebnis gesprochener Phoneme dieses Anwenders liefert, und
eine Übertragungsvorrichtung (4), die, wenn das zweite Sprachmodell zur Spracherkennung (2b) ausgewählt wurde, Phonemfolgen, die mit den Charakteristika der zweiten Sprache ausgesprochen und durch das zweite Sprachmodell (2b) erkannt werden, anhand des ersten Sprachmodelles (2a) auf Wörter in der ersten Sprache überträgt, um Wörter in der ersten Sprache zu erkennen, die mit einem Akzent der zweiten Sprache ausgesprochen werden.

2. Spracherkennungsvorrichtung (1) gemäß Anspruch 1, **gekennzeichnet durch**
mehr als zwei phonembasierte Sprachmodelle (2a...2n) zum Erkennen von Sprachäußerungen in mehr als zwei Sprachen, anhand derer die Erkennung von Phonemfolgen, die mit den Charakteristika der weiteren Sprachen ausgesprochen werden, erfolgt.

3. Spracherkennungsvorrichtung (1) gemäß Anspruch 1 oder 2,
**dadurch gekennzeichnet,**
**daß** die einzelnen Sprachmodelle (2a...2n) jeweils Bestandteil eines multilingualen Gesamtsprachmodelles (2) sind.

4. Verfahren zum Erkennen und Verarbeiten von Sprachäußerungen eines Anwenders in einer ersten Sprache, **gekennzeichnet durch** die Schritte automatisches Auswählen eines ersten oder eines zweiten Sprachmodelles (2a, 2b) zur Spracherkennung anhand einer Sprachäußerung des Anwenders, wobei dasjenige Sprachmodell (2a, 2b) ausgewählt wird, das ein besseres Erkennungsergebnis gesprochener Phoneme dieses Anwenders liefert, und, wenn das zweite Sprachmodell (2b) zur Spracherkennung ausgewählt wurde,
Übertragen der Phonemfolgen, die mit den Charakteristika der zweiten Sprache ausgesprochen und durch das zweite Sprachmodell (2b) erkannt werden, anhand des ersten Sprachmodelles (2a) auf Wörter in der ersten Sprache, um Wörter in der ersten Sprache zu erkennen, die mit einem Akzent der zweiten Sprache ausgesprochen werden.

5. Verfahren gemäß Anspruch 4,
**dadurch gekennzeichnet,**
**daß** mehr als zwei phonembasierte Sprachmodelle (2a...2n) zum Erkennen von Sprachäußerungen in mehr als zwei Sprachen herangezogen werden, anhand derer die Erkennung von Phonemfolgen, die mit den Charakteristika der weiteren Sprachen ausgesprochen werden, erfolgt.

6. Verfahren gemäß Anspruch 4 oder 5,
**dadurch gekennzeichnet,**
**daß** die einzelnen Sprachmodelle (2a...2n) jeweils ein Bestandteil eines multilingualen Gesamtsprachmodelles (2) sind.
